# EUROPEAN PATENT SPECIFICATION

(11) **EP 2 767 380 B1**
(45) Date of publication and mention of the grant of the patent: **17.06.2020**
(21) Application number: 14150570.1
(22) Date of filing: 09.01.2014
(51) Int. Cl.: B29C 45/17

(54) **Injection molding machine**
Spritzgießmaschine
Machine de moulage à injection

(30) Priority: 14.02.2013 JP 2013027164
(43) Date of publication of application: 20.08.2014
(73) Proprietor: SUMITOMO HEAVY INDUSTRIES, LTD., Tokyo 141-6025 (JP)
(72) Inventor: Tanaka, Yoshitada, Chiba, 263-0001 (JP)
(74) Representative: Hoffmann Eitle

(56) References cited:
- WO-A1-2008/120647
- JP-A- 2001 212 856
- US-A- 5 297 952
- US-A1- 2002 022 069
- US-A1- 2006 228 438
- US-A1- 2007 042 076

## Description

### FIELD

The present invention is related to an injection molding machine.

### BACKGROUND

In the injection molding machine, a cavity space of a mold unit is filled with a molten resin and the molten resin is set to produce a molding product. The mold unit includes a stationary mold and a movable mold. The cavity space is formed between the stationary mold and the movable mold at the time of the mold clamping. The molding product formed in the cavity space is ejected from the movable mold after the mold unit is opened (see International Publication Pamphlet No. WO2005/090052 A1, for example).

The stationary mold is attached to a stationary platen and the movable mold is attached to a movable platen. The movable platen is secured to the block, and a guide (or a guide rail) for guiding the block in front and rear directions is provided on a frame. With this configuration, the movable platen is movable in the front and rear directions with respect to the frame.

According to prior art, when a slide member such as a movable platen elastically deforms due to a mold clamping force or thermal stress, a force applied to the block to which the slide member is secured is great, which causes damage to the block and the guide for guiding the block in front and rear directions.

A further prior art document is US 5,297,952 A1, which refers to an injection molding machine having a machine frame, a stationary and a movable die platen as well as a front plate supporting a closure mechanism. Further, at least two rails are provided on the machine frame between the front plate and the stationary platen, and the movable die platen is guided on the at least two rails.

US 2002/0022069 A1 discloses a toggle lever clamping apparatus for an injection molding machine, wherein a drive unit is actuated to rotate a ball screw. Four tie bars are extended parallel between four corner parts of the stationary platen fixedly set on a base frame and four corner parts of a link housing set on the base frame so as to be actually movable.

Further documents are US 2007/0042076 A1, US 2006/0228438 A1 and JP 2001-212856 A1.

The present invention is made in consideration of the problem described above, and it is an object in one aspect of the present invention to provide an injection molding machine in which damage to a block and a guide can be reduced.

### SUMMARY

In order to solve the problem, according to the invention, an injection molding machine is provided, which includes the features of claim 1 or claim 2.

### BRIEF DESCRIPTION OF DRAWINGS

Fig. 1 is a diagram for illustrating a status of an injection molding machine 1 according to a first embodiment of the present invention at the time of completing a mold closing process.
Fig. 2 is a diagram for illustrating a configuration of a movable platen according to the first embodiment of the present invention.
Fig. 3 is a cross-sectional view for illustrating a status of an injection molding machine 2 according to a second embodiment at the time of completing a mold closing process.

### DESCRIPTION OF EMBODIMENTS

In the following, the best mode for carrying out the present invention will be described in detail by referring to the accompanying drawings. In respective drawings, the same or corresponding elements are given the same or corresponding numbers. Further, the following explanation is based on an assumption that "a front direction" corresponds to a direction in which the movable platen moves at the time of the mold closing process and "a rear direction" corresponds to a direction in which the movable platen moves at the time of the mold opening process.

### [First embodiment]

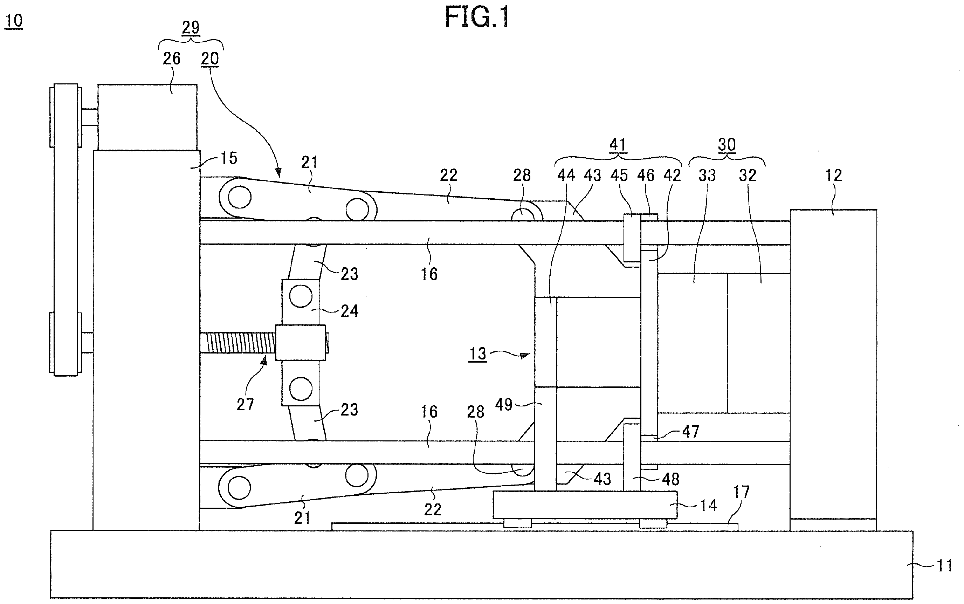

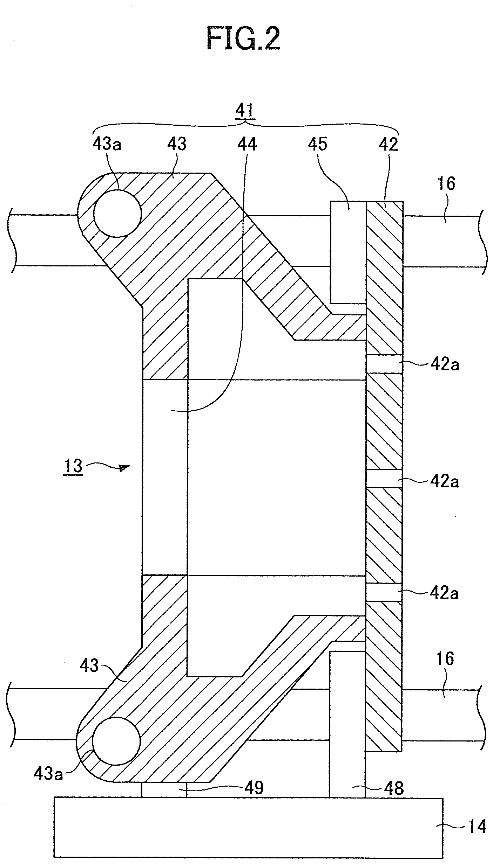

Fig. 1 is a diagram for illustrating a status of an injection molding machine 1 according to a first embodiment of the present invention at the time of completing a mold closing process. Fig. 2 is a diagram for illustrating a configuration of a movable platen according to the first embodiment of the present invention.

As illustrated in Fig. 1, the injection molding machine 10 includes a frame 11, a stationary platen 12, a movable platen 13, blocks 14, a rear platen 15 as a support, tie bars 16, guides 17, a toggle mechanism 20, a mold clamping motor 26, etc., for example.

The stationary platen 12 may be fixed to the frame 11. The rear platen 15 is disposed such that a space is formed between the rear platen 15 and the stationary platen 12. The rear platen 15 and the stationary platen 12 are coupled to each other by a plurality of (four, for example) tie bars 16. The rear platen 15 is disposed on the frame 11 such that the rear platen 15 can move in the front and rear directions so as to permit an extension of the tie bars 16 at the time of the mold clamping process.

The movable platen 13 is disposed between the rear platen 15 and the stationary platen 12. The movable platen 13 is secured to a plurality of (two, for example) blocks 14 by means of bolts or the like. A plurality of (two, for example) guides 17 are provided on the frame 11 for guiding the blocks 14 in the front and rear directions. The blocks 14 may hold rolling elements (balls, rollers, etc.) such that the rolling elements are arranged between the blocks 14 and the guides 17. The movable platen 13 moves together with the blocks 14 in the front and rear directions such that the movable platen 13 comes into contact with or departs from the stationary platen 12.

It is noted that, in the illustrated embodiment, the blocks 14 are guided by the guides 17 in the front and rear directions; however, a single block to which the movable platen 13 is secured may be guided by a plurality of the guides in the front and rear directions.

A movable mold 33 is attached to a surface of the movable platen 13 that is opposed to the stationary platen 12. On the other hand, a stationary mold 32 is attached to a surface of the stationary platen 12 that is opposed to the movable platen 13. A mold unit 30 is formed by the stationary mold 32 and the movable mold 33. When the movable mold 33 is moved in the front direction, the movable mold 33 comes into contact with the stationary mold 32, completing the mold closing process. Further, when the movable mold 33 is moved in the rear direction, the movable mold 33 departs from the stationary mold 32, completing the mold opening process.

The toggle mechanism 20 is disposed between the movable platen 13 and the rear platen 15. For example, the toggle mechanism 20 includes a cross head 24 that can move in the front and rear directions and in directions parallel to the mold opening and closing directions; second toggle levers 23 that are pivotably attached to the cross head 24; first toggle levers 21 that are pivotably attached to the rear platen 15; and toggle arms 22 that are pivotably attached to the movable platen 13. The second toggle levers 23 are coupled to the corresponding first toggle levers 21 by means of pins such that the second toggle levers 23 can rotate around the coupling points with respect to the corresponding first toggle levers 21. The first toggle levers 21 are coupled to the corresponding toggle arms 22 by means of pins such that the first toggle levers 21 can rotate around the coupling points with respect to the corresponding toggle arms 22. The toggle mechanism 20 is a so-called "involute five-joint double toggle mechanism" that has a symmetrical configuration in upper and lower directions.

The mold clamping motor 26 drives the toggle mechanism 20. The mold clamping motor 26 may be a servo motor. The mold clamping motor 26 causes the toggle mechanism 20 to operate via a ball screw mechanism 27 for converting a rotational motion into a rectilinear motion.

It is noted that the rotational motion of the mold clamping motor 26 is transmitted to the ball screw mechanism 27 according to the embodiment via a belt and pulleys, as illustrated in Fig. 1; however, the rotational motion of the mold clamping motor 26 may be directly transmitted to the ball screw mechanism 27.

When the mold clamping motor 26 is driven in a status where the mold opening is completed, the toggle mechanism 20 is operated such that the cross head 24 is moved in the front direction. As a result of this, the movable platen 13 is moved in the front direction and the movable mold 33 comes into contact with the stationary mold 32, completing the mold closing process.

Then, when the mold clamping motor 26 is further driven, the toggle mechanism 20 generates a mold clamping force whose magnitude is obtained by multiplying a propelling force generated by the mold clamping motor 26 by a toggle factor. A cavity space is formed between the stationary mold 32 and the movable mold 33 in the mold clamped status. An injection unit (not illustrated) injects a liquid molding material (molten resin, for example) to fill the cavity space with it. The injected molding material is set to form a molding product.

Then, when the mold clamping motor 26 is driven, the toggle mechanism 20 is operated such that the cross head 24 is moved in the rear direction. As a result of this, the movable platen 13 is moved in the rear direction, completing the mold opening process. After the mold opening process is completed, an ejector unit ejects the molding product from the movable mold 33.

A mold clamping force generating mechanism 29 is formed by the toggle mechanism 20, the mold clamping motor 26, etc.

Next, referring Fig. 1 and Fig. 2 again, a configuration of the movable platen 13 is explained. The movable platen 13 includes a movable platen body 41, front coupling portions 48 and rear coupling portions 49. The movable platen body 41 is formed by a mold mounting portion 42, arm portions 43, reinforce portions 44, and tie bar inserting portions 45, for example.

The mold mounting portion 42 is provided for the movable mold 33 that is attached to the mold mounting portion 42. For example, the mold mounting portion 42 may be plate-shaped. A front end surface of the mold mounting portion 42 defines a mold mounting surface to which the movable mold 33 is attached. A plurality of rod holes 42a are formed in the mold mounting portion 42 such that ejector rods of the ejector unit are inserted so that the ejector rods can move in the front and rear directions. The ejector rods are at rest at an eject starting point during a mold closing process and a mold opening process, and moved in the front direction to an eject end point from the eject starting point after the mold opening process. The ejector rods may be moved in the front direction during the mold opening process so as to shorten a molding cycle.

The arm portions 43 transmit the mold clamping force from the mold clamping force generating mechanism 29 to the mold mounting portion 42. The arm portions 43 are provided at the upper and lower portions of the mold mounting portion 42, respectively, for example, and include pin holes 43a (see Fig. 2) for inserting pins 28 (see Fig. 1) therethrough that couple to the end portions of the toggle mechanism 20 (end portions of the toggle arms 22). The arm portions 43 support the toggle arms 22 such that the toggle arms 22 can rotate around the center lines of the corresponding pins 28.

The reinforce portions 44 couple to the arm portions 43 such that the reinforce portions 44 limit a variation in a distance between the arm portions 43. For example, when the mold clamping force is transmitted from the arm portions 43 to mold mounting portion 42 and the reaction force from the mold unit 30 is applied to the mold mounting portion 42 such that the mold mounting portion 42 is deformed, the reinforce portions 44 can prevent such a deformation that the distance between the tip portions of the arm portions 43 increases. A rectangular frame-like portion is formed by the tip portions of two arm portions 43, which are disposed such that they are apart from each other in the upper and lower directions, and two reinforce portions 44, which are disposed such that they are apart from each other in the left and right directions.

The tie bar inserting portions 45 are provided on an upper portion of the mold mounting portion 42. The tie bar inserting portions 45 include tie bar through-holes for inserting the tie bars 16 threrethrough. The tie bar inserting portions 45 may form upper concave portions 46 (see Fig. 1) that are recessed from the mold mounting surface of the mold mounting portion 42. Bottom surfaces of the upper concave portions 46 are formed by front end surfaces of the tie bar inserting portions 45.

It is noted that the movable platen body 41 according to the embodiment has the tie bar inserting portions 45; however, the movable platen body 41 may have notches at positions where the upper tie bars 16 extend. The configuration is arbitrary as long as interference between the tie bars 16 and the movable platen 13 can be prevented.

The front coupling portions 48 and the rear coupling portions 49 couple the movable platen body 41 to the blocks 14. The front coupling portion 48 and the rear coupling portion 49 are provided for each block 14. The movable platen body 41, the front coupling portions 48 and the rear coupling portions 49 may be integrally formed by die casting, for example. At that time, the blocks 14 also may be integrally formed.

The front coupling portion 48 and the rear coupling portion 49 are provided such that the front coupling portion 48 and the rear coupling portion 49 are apart from each other in the front and rear directions. Because a space is formed between the front coupling portions 48 and the rear coupling portions 49, the front coupling portions 48 and the rear coupling portions 49 each become narrower correspondingly and thus easily deform. When the mold mounting portion 42 is elastically deformed due to a mold clamping force or thermal stress, the front coupling portions 48 and the rear coupling portions 49 elastically deform, which absorbs a force transmitted from the movable platen body 41 to the front coupling portions 48 and the rear coupling portions 49. Thus, the force transmitted to the front coupling portions 48 and the rear coupling portions 49 is not easily transmitted to the blocks 14. In this way, because the force transmitted to the blocks 14 can be reduced, damage (including a deformation) to the blocks 14 and the guides 17 for guiding the blocks 14 in the front and rear directions can be reduced.

The front coupling portions 48 and the rear coupling portions 49 each may include tie bar through-holes for inserting the lower tie bars 16 threrethrough. The tie bar through-holes are formed such that the elastically deformed front coupling portions 48 and the elastically deformed rear coupling portions 49 don't interfere with the tie bars 16. The lower tie bars 16 pass through the space between the front coupling portions 48 and the rear coupling portions 49 such that the lower tie bars 16 are visible in the space.

The front coupling portions 48 couple the mold mounting portion 42 to the blocks 14, as illustrated in Fig. 1. The front coupling portions 48 support the mold mounting portion 42 to which the movable mold 33 is attached, reduce an inclination of the mold mounting portion 42 due to the mass of the movable mold 33, and reduce an inclination of the movable mold 33.

The front coupling portions 48 may form lower concave portions 47 (see Fig. 1) that are recessed from the mold mounting surface of the mold mounting portion 42. Bottom surfaces of the lower concave portions 47 are formed by front end surfaces of the front coupling portions 48.

The rear coupling portions 49 couple the arm portions 43 to the blocks 14, as illustrated in Fig. 1. Because at the time of the mold clamping process the arm portions 43 are compressed in a longitudinal direction thereof in which the arm portions 43 have high rigidity, the arm portions 43 are not greatly deformed like the mold mounting portion 42. Because the arm portions 43 whose elastic deformation amounts are small are coupled to the blocks 14 by the rear coupling portions 49, the force transmitted to the rear coupling portions 49 can be reduced and thus the force transmitted to the blocks 14 can be reduced.

The rear coupling portions 49 may couple the blocks 14 to the frame-like portion that is formed by the tip portions of two arm portions 43 and the reinforce portions 44. It is noted that the rear coupling portions 49 may couple the reinforce portions 44 to the blocks 14.

It is noted that according to the embodiment the front coupling portions 48 and the rear coupling portions 49 are apart from each other in the front and rear directions; however, a direction in which a plurality of the coupling portions, which couple the movable platen body 41 to the blocks 14, are arranged with intervals is not limited to the front and rear directions. Further, a plurality of the coupling portions, which couple the mold mounting portion 42 to the blocks 14 may be provided, and a plurality of the coupling portions, which couple the arm portions 43 to the blocks 14 may be provided.

In the embodiment described above, a configuration of the movable platen as a slide member is explained; however, the present invention is applicable to the rear platen 15. The rear platen 15 is formed by a rear platen body for supporting an end portion of the toggle mechanism 20 (end portions of the first toggle levers 21, for example) and a plurality of coupling portions. The coupling portions are provided such that the coupling portions are apart from each other. The coupling portions each couple the rear platen body to blocks. The blocks are movable along guides provided on the frame 11. The blocks that move in the front and rear directions together with the rear platen 15 may be guided in the front and rear directions by means of guide rails 17 for the blocks 14 or other guide rails.

Further, the injection molding machine 10 according to the embodiment is of a horizontal type in which the mold opening and closing directions correspond to a horizontal direction; however, the injection molding machine 10 may be of a vertical type in which the mold opening and closing directions correspond to a vertical direction. In the case of the vertical type, a support and a movable platen are coupled by a plurality of tie bars and a stationary platen is disposed between the support and the movable platen. A toggle mechanism is disposed between a support, which can move in the upper and lower directions with respect to a stationary platen, and a stationary platen. The stationary platen is formed by a mold mounting portion and arm portions, and the arm portions transmit a mold clamping force generated by the toggle mechanism, etc., to the mold mounting portion.

### [Second embodiment]

According to the first embodiment described above, a mold clamping force generating mechanism is formed by the toggle mechanism 20 and the mold clamping motor 26. In contrast, according to the second embodiment described hereinafter, a mold clamping force generating mechanism is formed by an electromagnet, which is formed in the rear platen, and an attraction portion, which is formed in an attraction plate.

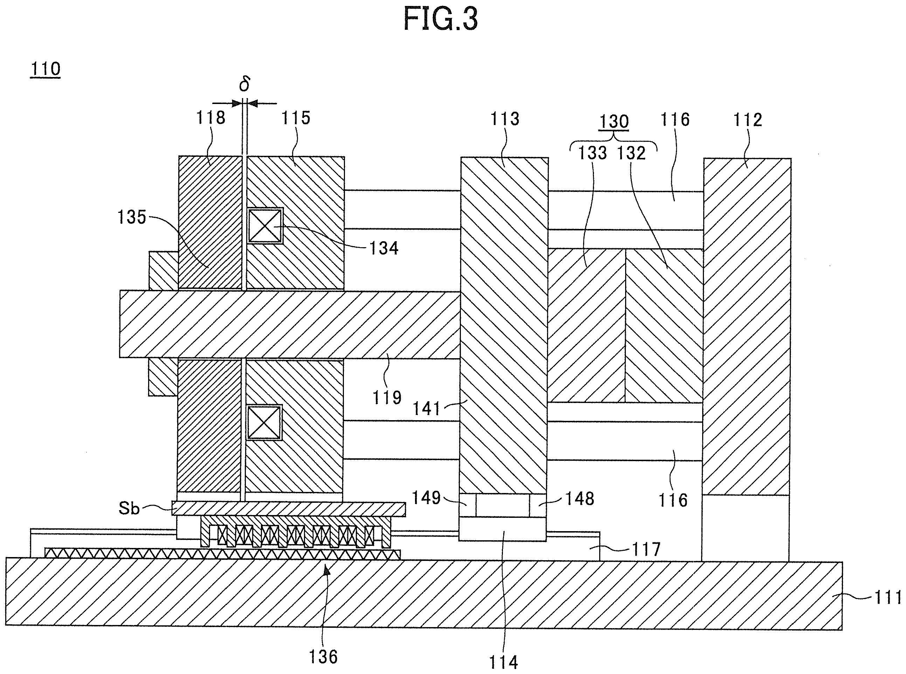

Fig. 3 is a cross-sectional view for illustrating a status of an injection molding machine according to a second embodiment of the present invention at the time of completing a mold closing process. This embodiment does not form part of the present invention. As illustrated in Fig. 3, the injection molding machine 110 includes a frame 111, a stationary platen 112, a movable platen 113, blocks 114, a rear platen 115, tie bars 116, guides 117, an attraction plate 118, a rod 119, etc., for example.

The rear platen 115 may be fixed to the frame 111. The stationary platen 112 is disposed such that a space is formed between the rear platen 115 and the stationary platen 112. The stationary platen 112 and the rear platen 115 are coupled to each other by a plurality of (four, for example) tie bars 116. The stationary platen 112 is disposed on the frame 111 such that the stationary platen 112 can move in the front and rear directions so as to permit an extension of the tie bars 116 at the time of the mold clamping process.

The movable platen 113 is disposed between the rear platen 115 and the stationary platen 112. The movable platen 113 is secured to a plurality of (two, for example) blocks 114 by means of bolts or the like. A plurality of (two, for example) guides 117 are provided on the frame 111 for guiding the blocks 114 in the front and rear directions. The blocks 114 may hold rolling elements such that the rolling elements are arranged between the blocks 114 and the guides 117. The movable platen 113 moves together with the blocks in the front and rear directions such that the movable platen 113 comes into contact with or departs from the stationary platen 112.

It is noted that, in the illustrated embodiment, the blocks 114 are guided by the guides 117 in the front and rear directions; however, a single block may be guided by a plurality of guides in the front and rear directions. In other words, the blocks 114 may be integrated.

The attraction plate 118 moves together with the movable platen 113 in the front and rear directions. The attraction plate 118 is coupled to the movable platen 113 via the rod 119. The rear platen 115, which is disposed between the attraction plate 118 and the movable platen 113, has a through-hole formed therein for passing the rod 119 therethrough.

The attraction plate 118 is movable in the front and rear directions at the back of the rear platen 115. The attraction plate 118 is secured to a slide base Sb that is movable along the guides 117. The slide base Sb may hold rolling elements such that the rolling elements are arranged between the slide base Sb and the guides 117.

A linear motor 136 is provided between the attraction plate 118 and the frame 111 for moving the attraction plate 118 in the front and rear directions to move the movable platen 113 in the front and rear directions. It is noted that the linear motor 136 may be provided between the movable platen 113 and the frame 111.

A mold clamping force generating mechanism for generating the mold clamping force is formed by an electromagnet 134, which is formed in the rear platen 115, and an attraction portion 135, which is formed in the attraction plate 118. When a current is applied to the electromagnet 134 to drive the electromagnet 134, an attraction force is generated between the electromagnet 134 and the attraction portion 135 and thus the mold clamping force is generated. Further, when the application of the current to the electromagnet 134 is stopped, the attraction force disappears and thus the mold clamping force disappears.

It is noted that a positional relationship between the electromagnet and the attraction portion may be reversed. For example, the electromagnet 134 may be provided in the attraction plate 118 and the attraction portion 135 may be provided in the rear platen 115.

When the linear motor 136 is driven to move the movable platen 113 in the front direction in a status where the mold opening is completed, the movable mold 133 comes into contact with the stationary mold 132, completing the mold closing process, as illustrated in Fig. 3. At the time of completing the mold closing process, a predetermined gap δ is formed between the rear platen 115 and the attraction plate 118, that is to say, between the electromagnet 134 and the attraction portion 135. It is noted that the force required for the mold closing is sufficiently smaller than the mold clamping force.

After the mold closing process is completed, the electromagnet 134 is driven to generate the attraction force at the predetermined gap δ between the electromagnet 134 and the attraction portion 135. The attraction force causes the mold clamping force to be generated between the movable platen 113 and the stationary platen 112. A cavity space is formed between the stationary mold 132 and the movable mold 133 in the mold clamped status. An injection unit (not illustrated) injects a liquid molding material (molten resin, for example) to fill the cavity space with it. The injected molding material is set to form a molding product.

Then, when the linear motor 136 is driven to move the movable platen 113 in the rear direction, the movable platen 113 is moved in the rear direction, completing the mold opening process. After the mold opening process is completed, the ejector unit ejects the molding product from the movable mold 133.

Next, referring Fig. 3 again, a configuration of the movable platen 113 is explained. The movable platen 113 includes a movable platen body 141, a front coupling portion 148 and a rear coupling portion 149.

The movable platen body 141 is provided for the movable mold 133 that is attached to the mold mounting portion 42. For example, the movable platen body 141 may be plate-shaped. A front end surface of the movable platen body 141 defines a mold mounting surface to which the movable mold 133 is attached. The movable platen body 141 is coupled to the attraction plate 118 via the rod 119.

The movable platen body 141 includes tie bar inserting portions at four corners thereof for inserting the tie bars 116 threrethrough. It is noted that instead of the tie bar inserting portions for inserting the tie bars 116 threrethrough, channels for preventing the interference with the tie bars 116 may be provided.

The front coupling portions 148 and the rear coupling portions 149 couple the movable platen body 141 to the blocks 114. The front coupling portion 148 and the rear coupling portion 149 are provided for each block 114. The movable platen body 141, the front coupling portions 148 and the rear coupling portions 149 may be integrally formed by die casting, for example.

The front coupling portion 148 and the rear coupling portion 149 are provided such that the front coupling portion 148 and the rear coupling portion 149 are apart from each other in the front and rear directions. Because a space is formed between the front coupling portions 148 and the rear coupling portions 149, the front coupling portions 148 and the rear coupling portions 149 each become narrower correspondingly and thus are easily deformed. When the movable platen body 141 is elastically deformed due to a mold clamping force or thermal stress, the front coupling portions 418 and the rear coupling portions 149 elastically deform, which absorbs a force transmitted from the movable platen body 141 to the front coupling portions 148 and the rear coupling portions 149. Thus, the force transmitted to the front coupling portions 148 and the rear coupling portions 149 is not easily transmitted to the blocks 114. In this way, because the force transmitted to the blocks 114 can be reduced, damage (including a deformation) to the blocks 114 and the guides 117 for guiding the blocks 114 in the front and rear directions can be reduced.

It is noted that the movable platen body 141 according to the embodiment is plate-shaped; however, the movable platen body 141 may have a plate-shaped mold mounting portion and tie bar inserting portions which form concave portions recessed from the mold mounting surface of the mold mounting portion, as is the case with the movable platen body 41 illustrated in Fig. 1 and Fig. 2. Further, the front coupling portions 148 and the rear coupling portions 149 may have tie bar through-holes for inserting the tie bars 116 threrethrough, as is the case with the front coupling portions 48 and the rear coupling portions 49 illustrated in Fig. 1 and Fig. 2.

In the embodiment described above, a configuration of the movable platen as a slide member is explained; however, the present invention is applicable to the stationary platen 112 and the attraction plate 118. The stationary platen 112 may be formed by a stationary platen body to which the stationary mold 132 is attached and a plurality of the coupling portions. The coupling portions are provided such that the coupling portions are apart from each other. The coupling portions each couple the stationary platen body to blocks. The blocks are movable along guides provided on the frame 111. The blocks that move in the front and rear directions together with the stationary platen 112 may be guided in the front and rear directions by means of guide rails 117 for the blocks 114 or other guide rails. Similarly, the attraction plate 118 is formed by an attraction plate body, in which an attraction portion is formed, and a plurality of the coupling portions.

The present invention is disclosed with reference to the preferred embodiments. However, the present invention is not limited to these embodiments, but various variations and modifications may be made without departing from the scope of the present invention.

## Claims

1. An injection molding machine (10, 110), comprising:
a frame (11, 111);
a guide (17, 117) provided on the frame;
a block (14, 114) that is movable along the guide; and
a slide member (13, 113) that moves together with the block, wherein
the slide member includes a slide member body (41, 141) and a plurality of coupling portions (48, 49, 148, 149), the coupling portions coupling the slide member body and the block, and
the coupling portions (48, 49, 148, 149) are provided such that the coupling portions are apart from each other,
further comprising: a mold clamping force generating mechanism (29) that generates a mold clamping force, wherein
the slide member body includes a mold mounting portion (42) to which the mold is attached, and an arm portion (43) that transmit the mold clamping force from the mold clamping force generating mechanism to the mold mounting portion,
**characterized in that** at least one of the coupling portions (48, 49, 148, 149) couples the mold mounting portion to the block, and at least one of other coupling portions couples the arm portion to the block (14, 114).

2. Injection molding machine (10, 110) according to claim 1, comprising:
blocks (14, 114) that are movable along the guide;
wherein the slide member (13, 113) moves together with the blocks,
wherein the coupling portions include front coupling portions (48, 148) and rear coupling portions (49, 149),
and wherein the slide member body (41, 141), the front coupling portions (48, 148) and the rear coupling portions (49, 149) are integrally formed, and wherein the blocks (14, 114) are integrally formed.

## Patentansprüche

1. Spritzgießmaschine (10, 110), umfassend:
einen Rahmen (11, 111);
eine Führung (17, 117), die auf dem Rahmen bereitgestellt ist;
einen Block (14, 114), der entlang der Führung beweglich ist; und
einen Schieber (13, 113), der sich zusammen mit dem Block bewegt, wobei
der Schieber einen Schieberkörper (41, 141) und eine Vielzahl von Kupplungsabschnitten (48, 49, 148, 149) einschließt, wobei die Kupplungsabschnitte den Schieberkörper und den Block verkuppeln, und
die Kupplungsabschnitte (48, 49, 148, 149) so bereitgestellt sind, dass die Kupplungsabschnitte voneinander beabstandet sind,
weiter umfassend: einen Formschließkraft-Erzeugungsmechanismus (29), der eine Formschließkraft erzeugt, wobei
der Schieberkörper einen Formbefestigungsabschnitt (42) einschließt, an dem die Form befestigt ist, und einen Armabschnitt (43), der die Formschließkraft von dem Formschließkraft-Erzeugungsmechanismus auf den Formbefestigungsabschnitt überträgt,
**dadurch gekennzeichnet, dass** mindestens einer der Kupplungsabschnitte (48, 49, 148, 149) den Formbefestigungsabschnitt an den Block kuppelt und mindestens einer von anderen Kupplungsabschnitten den Armabschnitt an den Block (14, 114) kuppelt.

2. Spritzgießmaschine (10, 110) nach Anspruch 1, umfassend:
Blöcke (14, 114), die entlang der Führung beweglich sind;
wobei sich der Schieber (13, 113) zusammen mit den Blöcken bewegt,
wobei die Kupplungsabschnitte vordere Kupplungsabschnitte (48, 148) und hintere Kupplungsabschnitte (49, 149) einschließen,
und wobei der Schieberkörper (41, 141), die vorderen Kupplungsabschnitte (48, 148) und die hinteren Kupplungsabschnitte (49, 149) einstückig gebildet sind, und wobei die Blöcke (14, 114) einstückig gebildet sind.

## Revendications

1. Machine de moulage par injection (10, 110) comprenant :
un bâti (11, 111) ;
un guide (17, 117) prévu sur le bâti ;
un bloc (14, 114) qui est mobile le long du guide ; et
un élément coulissant (13, 113) qui se déplace conjointement avec le bloc, dans laquelle :
l'élément coulissant comprend un corps d'élément coulissant (41, 141) et une pluralité de parties de couplage (48, 49, 148, 149), les parties de couplage couplant le corps d'élément coulissant et le bloc, et
les parties de couplage (48, 49, 148, 149) sont prévues de sorte que les parties de couplage sont espacées l'une de l'autre,
comprenant en outre : un mécanisme de génération de force de serrage de moule (29) qui génère une force de serrage de moule, dans laquelle :
le corps d'élément coulissant comprend une partie de montage de moule (42) à laquelle le moule est fixé, et une partie de bras (43) qui transmet la force de serrage de moule du mécanisme de génération de force de serrage de moule à la partie de montage de moule,
**caractérisée en ce qu'**au moins l'une des parties de couplage (48, 49, 148, 149) couple la partie de montage de moule au bloc, et au moins l'une des autres parties de couplage couple la partie de bras au bloc (14, 114).

2. Machine de moulage par injection (10, 110) selon la revendication 1, comprenant :
des blocs (14, 114) qui sont mobiles le long du guide ;
dans laquelle l'élément coulissant (13, 113) se déplace conjointement aux blocs,
dans laquelle les parties de couplage comprennent des parties de couplage avant (48, 148) et des parties de couplage arrière (49, 149),
et dans laquelle le corps d'élément coulissant (41, 141), les parties de couplage avant (48, 148) et les parties de couplage arrière (49, 149) sont formées de manière solidaire, et dans laquelle les blocs (14, 114) sont formés de manière solidaire.
